**Europäisches Patentamt**

**European Patent Office**

**Office européen des brevets**

(19)

(11) Numéro de publication: **0 008 143**
**B1**

(12) **FASCICULE DE BREVET EUROPEEN**

(45) Date de publication du fascicule du brevet: **02.06.82**

(51) Int. Cl.³: **C 08 L 23/08,**
**C 08 L 97/02, C 08 J 5/04**

(21) Numéro de dépôt: **79200422.8**

(22) Date de dépôt: **30.07.79**

(54) **Procédé pour la préparation d'objets à partir de compositions contenant du polyéthylène modifié par des monomères polaires et des fibres cellulosiques.**

(30) Priorité: **11.08.78 FR 7823947**

(43) Date de publication de la demande:
**20.02.80 Bulletin 80/4**

(45) Mention de la délivrance du brevet:
**02.06.82 Bulletin 82/22**

(84) Etats contractants désignés:
**AT BE CH DE FR GB IT LU NL SE**

(56) Documents cités:
**DE - A - 1 669 765**
**DE - A - 2 621 961**
**FR - A - 2 252 206**
**FR - A - 2 253 784**
**FR - A - 2 322 001**
**FR - A - 2 381 804**

(73) Titulaire: **SOLVAY & Cie (Société Anonyme)**
**Rue du Prince Albert, 33**
**B-1050 Bruxelles (BE)**

(72) Inventeur: **Georlette, Pierre**
**Rue Scheers, 3**
**D-5990 Hamme-Mille (BE)**
Inventeur: **Bouteille, René**
**Drève Dudinsart, 28**
**B-1420 Braine-l'Alleud (BE)**

(74) Mandataire: **Eischen, Roland**
**Solvay & Cie Département de la Propriété**
**Industrielle Rue de Ransbeek 310**
**B-1120 Bruxelles (BE)**

Courier Press, Leamington Spa, England.

### Procédé pour la préparation d'objets à partir de compositions contenant du polyéthylène modifié par des monomères polaires et des fibres cellulosiques

La présente invention concerne un procédé pour la fabrication d'objets conformés de formes quelconques à partir de compositions polyoléfiniques comprenant du polyéthylène de haute densité modifié au moyen de monomères polaires et des fibres cellulosiques en teneurs élevées.

On connaît déjà, par le brevet belge 860 469 déposé le 4 novembre 1977 au nom de la Demanderesse, un procédé pour fabriquer, à partir de compositions polyoléfiniques, des objets conformés particuliers, à savoir des panneaux composites comprenant des feuilles métalliques associées par pressage à chaud à des feuilles polyoléfiniques constituées des compositions polyoléfiniques précitées.

Selon ce procédé connue, les compositions polyoléfiniques peuvent être préparées et mises en feuille lorsqu'elles se trouvent à des températures tout juste supérieures aux températures de fusion des polyoléfines mises en oeuvre. Après cela, les feuilles polyoléfiniques sont mises en contact avec les feuilles métalliques et soumises à un pressage qui est effectué à des températures nettement supérieures aux températures de fusion des polyoléfines mises en oeuvre. C'est au cours de ce pressage que se développe l'adhérence, extrêmement élevée, entre les feuilles polyoléfiniques et les feuilles métalliques qui caractérise les panneaux en question. Cette très forte adhérence résulte de la mise en oeuvre conjointe de polyoléfines modifiées par des monomères polaires et de fibres cellulosiques. Il va de soi que ce procédé connu est limité, dans ses applications, à la fabrication d'objets présentant certaines formes particulières et possédant une constitution particulière.

Par ailleurs, il est connu, par le brevet britannique 1 479 335 déposé le 20 novembre 1974 au nom de Mitsubishi Petrochemical Co. Limited, de façonner des compositions polyoléfiniques comprenant des polyoléfines modifiées au moyen de monomères polaires et des fibres cellulosiques, en faibles teneurs, par malaxage à des températures nettement supérieures aux températures de fusion des polyoléfines mises en oeuvre. Les objets conformés obtenus à partir de pareilles compositions polyoléfiniques présentent des propriétés mécaniques insuffisantes pour de nombreuses applications.

Enfin, les objets conformés obtenus à partir de compositions polyoléfiniques comprenant, à fortes teneurs, du polyéthylène de haute densité modifié par des monomères polaires et des fibres cellulosiques façonnées par malaxage à des températures tout juste supérieures aux températures de fusion des polyoléfins mises en oeuvre présentent également des propriétés insuffisantes pour de nombreuses applications.

La présente invention résout dès lors le problème consistant à fournir un procédé pour la fabrication d'objets conformés de formes quelconques constitués exclusivement de compositions polyoléfiniques comprenant, à fortes teneurs, du polyéthylène de haute densité modifié par des monomères polaires et des fibres cellulosiques, présentant des propriétés mécaniques exceptionnellement élevées.

La présente invention concerne à cet effet un procédé pour la fabrication d'objets conformés à partir de compositions polyoléfiniques comprenant entre 30 et 70% en poids de polyéthylène de haute densité modifié au moyen de monomères polaires comprenant au moins une liaison insaturée et au moins un groupe carboxylique éventuellement sous forme d'anhydride et entre 30 et 70% en poids de fibres cellulosiques selon lequel les compositions polyoléfiniques sont soumises à un malaxage opéré à une température supérieure d'au moins 20°C à la température de fusion du polyéthylène avant d'être mises en forme.

Le fait qu'il soit possible d'effectuer le malaxage à des températures aussi élevées est suprenant car on pouvait s'attendre, pour les raisons mentionnées plus haut que ces compositions adhèrent fortement aux surfaces métalliques des appareils de malaxage, rendant toute opération de malaxage impossible à ces températures.

En plus de polyéthylène de haute densité modifié et de fibres cellulosiques, ces compositions peuvent contenir d'autres matériaux compatibles avec celles-ci, tels que des polyoléfines non modifiées ou des fibres non cellulosiques. On préfère que les compositions contiennent au moins 80% en poids de polyéthylène de haute densité modifié et de fibres cellulosiques, les meilleurs résultats étant obtenus lorsqu'elles contiennent au moins 90% en poids.

Par polyéthylène modifié au moyen de monomères polaires comprenant au moins une liaison insaturée et au moins un groupe carboxylique éventuellement sous forme d'anhydride, on entend désigner un polyéthylène comportant, en plus d'unités monomériques dérivées de l'éthylène, des unités dérivées de ces monomères polaires.

Le polyéthylène de haute densité modifié mis en oeuvre selon l'invention contient en général, au moins 50% et, de préférence, au moins 80% d'unités monomériques dérivées de l'éthylène ainsi que des unités dérivées des monomères polaires définis ci-dessus. Les meilleurs résultats sont obtenus avec du polyéthylène constitué, à l'exception des unités dérivées de monomères polaires, exclusivement d'unités dérivées de l'éthylène.

Des résultats avantageux sont obtenus avec les polyéthylènes modifiés de haute densité dont les indices de fusion mesurés selon la norme ASTM-D - 1238-65 T, sont compris entre 0,05 et 20 et, de préférence, entre 0,5 et 10 g/10 min.

Les monomères polaires mis en oeuvre pour modifier le polyéthylène peuvent être n'importe quels composés organiques comprenant au moins une liaison insaturée, de préférence de type oléfinique, et au moins un groupe carboxylique éventuellement sous forme d'anhydride.

De préférence, on utilise des monomères comprenant de 3 à 12 atomes de carbone dans leur molécule. Ces monomères polaires peuvent être notamment des acides monocarboxyliques insaturés tels que les acides acrylique, méthacrylique on chloroacrylique, ou des acides polycarboxyliques insaturés tels que les acides maléique, fumarique et itaconique, ou encore les anhydrides dérivés de ces acides tels que l'anhydride maléique. Les monomères polaires préférés sont les acides acrylique et méthacrylique et l'anhydride maléique. Les meilleurs résultats sont obtenus avec l'anhydride maléique.

La quantité de monomères polaires modifiant le polyéthylène est en général comprise entre 0,002 et 20% en poids du polyéthylène mis en oeuvre. Habituellement, on préfère que cette quantité soit comprise entre 0,01 et 10%, les meilleurs résultats étant obtenus entre 0,05 et 5%.

Selon un mode de réalisation particulier de l'invention, les compositions polyoléfiniques sont préparées en mélangeant les fibres cellulosiques et le polyéthylène de haute densité modifié au préalable et se trouvant sous une forme solide suffisamment divisée pour permettre le mélange.

Le polyéthylène modifié au préalable, mis en oeuvre selon le mode de réalisation peut être avantageusement un copolymère statistique, greffé ou séquencé. La préférence est donnée toutefois aux copolymères greffés dans lesquels la chaîne principale (ou squelette) est de structure polyéthylènique et les chaînes latérales (ou greffons) sont dérivées de monomères polaires.

Les copolymères greffés peuvent être fabriqués par toutes les techniques connues de greffage telles que le greffage en solution, par irradiation ou en présence d'initiateurs, et le greffage par malaxage à l'état fondu. La réaction de greffage est opérée avantageusement en présence de radicaux libres pouvant être générés par toutes les techniques connues à cet effet, telles que l'irradiation ou l'ozonisation. Habituellement, on opère à température élevée et, de préférence, en présence de composés libérant des radicaux libres sous l'action de la chaleur. Toute particulièrement, on préfère travailler en présence de composés peroxydés organiques, additionnés ou non d'agents polyfonctionnels, ayant une température de décomposition supérieure à 130°C. Des exemples de composés peroxydés utilisables sont le 2,5 diméthyl-2,5 di(tertio butylperoxy)hexane, le 2,5 diméthyl-2,5 di(tertio butyl-peroxy)hexyne, le peroxyde de dibutyltertiaire, l-hydroperoxyde de tert-butyle, l'alpha, alpha' di-(tertio butyl-peroxy)diisopropylbenzène, ainsi que le peroxyde de dicumyle. Les peroxydes précités sont généralement utilisés à raison de 0,01 g à 20 g par kg de polyéthylène mis en oeuvre. Habituellement, on utilise des quantités comprises entre 0,05 et 10 g/kg et de préférence comprises entre 0,1 et 5 g/kg.

Le polyéthylène de haute densité modifié mis en oeuvre selon ce mode de réalisation peut contenir divers additifs habituellement ajoutés aux polyoléfines tels que des charges, en particulier minérales, des stabilisants, des lubrifiants, des agents anti-acides, des agents renforçant, la résistance aux chocs, des colorants, etc. Ces additifs sont présents de préférence à raison de moins de 10% en poids du polyéthylène modifié.

Le polyéthylène modifié au préalable peut être mis en oeuvre sous une forme quelconque et, de préférence, sous une forme solide désirée permettant le mélange à sec avec les fibres cellulosiques, par exemple sous forme de poudres, de paillettes, de particules, de granules, de fibrilles, de fibres, ou de déchets de fibres.

Les fibres cellulosiques mises en oeuvre selon l'invention peuvent être quelconques et se présenter sous n'importe quelle forme suffisamment divisée. On peut ainsi employer des particules ou des fibres de bois feuillus on résineux, de la sciure de bois, des déchets de paille, de la pâte à papier et des déchets de papier déchiquetés, pour préparer les mélanges.

On utilise de préférence des fibres cellulosiques se présentant sous forme de particules ayant une dimension moyenne comprise entre 0,1 et 3 mm et ayant une teneur en eau qui ne dépasse pas 15% en poids et, de préférence, 10% en poids. Les fibres cellulosiques préférés sont les matières lignocellulosiques produites à partir de bois résineux ou feuillus.

Selon un mode de réalisation de l'invention qui est préféré, les compositions polyoléfiniques ne sont pas préparées à partir de polyéthylène modifié au préalable mais, au contraire, à partir de polyéthylène non modifié. Selon ce mode de réalisation les compositions polyoléfiniques sont préparées en mélangeant directement les fibres cellulosiques avec le polyéthylène non modifié et des monomères polaires et en soumettant les compositions à un malaxage à température élevée selon l'invention. De préférence, le mélange contient également des composés capables de libérer des radicaux libres sous l'action de la chaleur.

Toutes les indications fournies ci-avant en rapport avec le mode de réalisation où l'on met en oeuvre du polyéthylène de haute densité modifié au préalable sont valables, mutatis mutandis, pour le mode préféré de réalisation. C'est le cas notamment pour les indications relatives au choix du polyéthylène, des monomères polaires, de la quantité de monomères polaires, des composés capables de libérer des radicaux libres, de leur quantité, de la forme des polyoléfines, des fibres cellulosiques, et de leur forme.

Quel que soit le mode de réalisation utilisé, les compositions polyoléfiniques peuvent être préparées selon toutes les techniques connues en mélangeant les ingrédients soit alors que le polyéthylène se trouve à l'état solide, soit alors qu'il se trouve à l'état fondu. Dans tous les cas, les compositions polyoléfiniques sont soumises à un malaxage à une température supérieure d'au moins 20°C à la température de fusion du polyéthylène de haute densité constitutif.

Le malaxage peut être réalisé par tout moyen connu à cet effet. Ainsi, on peut travailler indifféremment en malaxeurs du type externe ou du type interne. Pour des raisons techniques, écologiques et économiques, on préfère cependant travailler dans des malaxeurs du type interne et plus particulièrement dans des extrudeuses qui constituent une classe particulière de malaxeurs internes.

Le malaxage peut être effectué dans les conditions habituelles de façonnage des objets en polyoléfines bien connues de l'homme de métier. De préférence, le malaxage est opéré à des températures supérieures d'au moins 30°C à la température de fusion du polyéthylène. Les meilleurs résultats sont obtenus lorsqu'il est opéré à des températures supérieures d'au moins 40°C à cette température de fusion.

Par température de fusion du polyéthylène de haute densité, on entend désigner la température à laquelle toutes les parties cristallines présentes dans le polyéthylène, sont fondues (H.V. BOENIG POLYOLEFINS: Structure and Properties, Elsevier Publishing to Amsterdam — London — New-York, 1966, p. 217 et suivantes).

La température maximale applicable au cours du malaxage n'est pas critique en elle-même et est limitée en pratique par la nature et les températures de décomposition des constituants de la composition polyoléfinique. Généralement, on travaille à des températures ne dépassant pas 250°C. De préférence on opère à des températures inférieures à 220°C.

La durée du malaxage à température élevée est choisie en tenant compte de la nature des fibres cellulosiques et de la température appliquée. Cette durée est généralement comprise entre 5 secondes et 30 minutes et le plus souvent entre 10 secondes et 15 minutes. On préfère travailler pendant des durées situées entre 30 secondes et 10 minutes.

Après leur malaxage, les compositions polyoléfiniques se trouvent sous une forme pâteuse et sont moulables selon les techniques traditionnelles de moulage des matières plastiques, telles que l'extrusion, l'injection, le pressage ou le calandrage. Elles sont donc, avantageusement, mises en forme directement, soit sous leur forme définitive, un profilé par exemple, soit sous forme semi-finie, une plaque par exemple.

Les objets conformés obtenus selon l'invention peuvent être utilisés dans de nombreuses applications. Une application particulièrement avantageuse est la fabrication, par extrusion au moyen d'une filière plate ou par calandrage, de plaques. Ces plaques peuvent être ultérieurement thermoformées, éventuellement après avoir été revêtues d'une feuille décorative adéquate, pour fabriquer des objets tels que des panneaux intérieurs de portes de voitures automobiles.

L'invention est explicitée par les exemples de réalisation dont la description suit et qui sont donnés à titre illustratif.

Exemple 1 (de comparaison)

Au moyen d'un malaxeur TROESTER dont les cylindres sont maintenus à 140°C, on traite, durant 5 minutes, une composition comprenant 60 parties en poids de déchets de hêtre et 40 parties en poids de polyéthylène de haute densité vendu sous la marque ELTEX, qualité A 1050, par la Demanderesse.

Le crêpe obtenu est ensuite pressé pendant 5 minutes à 140°C et sous une pression de 20 kg/cm².

Les caractéristiques principales de la feuille obtenue sont données au Tableau I ci-après.

Exemple 2 (de comparaison)

Au moyen d'un malaxeur TROESTER dont les cylindres sont maintenus à 140°C, on traite durant 5 minutes une composition comprenant 60 parties en poids de déchets de hêtre et 40 parties en poids de polyéthylène de haute densité (ELTEX A 1050) contenant, à raison de 5 parties en poids du polymère d'anhydride maléique et, à raison de 0,5 partie en poids de polymère du peroxyde de dicumyle.

La crêpe est ensuite pressé comme à l'exemple 1.

Les caractéristiques principales de la feuille obtenue sont données au Tableau I ci-après.

Exemple 3 (de comparaison)

Au moyen d'un malaxeur TROESTER dont les cylindres sont maintenus entre 150 et 155°C, on traite durant 20 minutes une composition comprenant 45 parties en poids de polyéthylène de haute densité (ELTEX A 1050), 50 parties en poids de déchets de hêtre, et 5 parties en poids de polyéthylène greffé, obtenu par extrusion de polyéthylène (ELTEX A 1050) avec 2,5 parties en poids du polymère d'anhydride maléique et 0,2 partie en poids du polymère de di-tert-butylperoxyde.

Le crêpe obtenu est pressé dans les conditions décrites à l'exemple 1. Les caractéristiques principales de la feuille obtenue sont données au Tableau I ci-après.

Exemple 4

Dans un mélangeur LOEDIGE, qui fonctionne sans chauffage, on mélange pendant 10 minutes 50 parties en poids de polyéthylène de haute densité (ELTEX B 4020), environ 50 parties en poids de sciure d'épicéa, 0,625 partie en poids d'anhydride maléique et 0,0625 partie en poids de 2,5 diméthyl 2,5(ditertio-butyl-peroxy)hexane. Cette composition est ensuite traitée dans un mélangeur interne INTERMIX vendu par la Société Repiquet, à 180°C pendant 5 minutes et déchargée dans un mélangeur homogénéiseur dont les cylindres sont chauffés à 160°C afin d'être homogénéisé pendant 2 minutes.

La composition obtenue est ensuite pressée comme à l'exemple 1. Les caractéristiques principales de la feuille obtenue sont données au Tableau I ci-après.

Exemple 5

Au moyen d'un mélangeur DYOSNA, qui fonctionne sans chauffage, on mélange pendant 10 minutes, 50 parties en poids de polyéthylène (ELTEX A 1050), 50 parties en poids de sciure d'épicéa, 2,5 parties en poids d'anhydride maléique et 0,25 partie en poids de 2,5 diméthyl 2,5(ditertiobutylperoxy)hexane.

Le mélange est ensuite alimenté dans la trémie d'une extrudeuse EICKHOFF PWE 120 PV équipée de 8 satellites dont la température du corps est de 170°C et la température de la filière de 180°C.

La feuille sort de l'extrudeuse au travers d'une filière plate et est ensuite lissée entre les cylindres d'une calandre lisseuse chaude sans qu'aucune adhérence ne soit observée. Les caractéristiques principales de la feuille obtenue sont résumées au Tableau I ci-après.

Exemple 6

On opère dans les mêmes conditions qu'à l'exemple 5 mais en partant d'un mélange ne contenant que 0,625 partie en poids d'anhydride maléique et 0,0625 partie en poids du composé peroxydé.

La feuille obtenue par extrusion au travers d'une filière plate présente les propriétés caractéristiques données au Tableau I ci-après.

Exemple 7

On traite durant 20 minutes, au moyen d'un malaxeur TROESTER dont les cylindres sont maintenus entre 205 et 210°C, une composition comprenant 50% en poids de déchets de hêtre et 50% en poids de polyéthylène (ELTEX A 1050) greffé, obtenu par extrusion préalable dudit polyéthylène avec 2,5% en poids d'anhydride maléique et 0,2% en poids de di-tert-butylperoxyde.

Le crêpe est pressé comme décrit à l'exemple 1 et les caractéristiques principales de la feuille obtenue sont données au Tableau I ci-après.

Tableau I

| | Exemples | | | | | | |
|---|---|---|---|---|---|---|---|
| | 1 (compara-tif) | 2 (compara-tif) | 3 (compara-tif) | 4 | 5 | 6 | 7 |
| Epaisseur —, mm | 2,5 | 2,75 | 2,5 | 2,5 | 2,5 | 2,5 | 2,5 |
| Adhérence à l'aluminium — kg/cm | 0 | 1,86 | 2,14 | 1,80 | 2,58 | 2,94 | 2,07 |
| Teneur en anhydride maléique — (g/kg polyéthylène) | 0 | 0,7 | 1,4 | 1,4 | 10,3 | 1,6 | 14,0 |
| Résistance à la rupture — kg/cm² | | | | | | | |
| — sens longitudinal | 170 | 145 | 222 | 324 | 390 | 410 | 309 |
| — sens transversal | 115 | 51 | 181 | 260 | 350 | 330 | 204 |
| Module d'élasticité en flexion (sens longitudinal) kg/cm² | 30000 | 30000 | 31000 | 33000 | 34000 | 37000 | 33000 |
| Module de rigidité en torsion à 23°C, kg/cm², (sens longitudinal) | 3000 | 3000 | — | 7026 | 5250 | 5870 | — |

La résistance à la rupture est mesurée selon la norme ASTM 412D. L'adhérence est mesurée par test de pelage selon la norme ASTM-D 903 (angle de traction: 180°).

On peut déduire de la comparaison des exemples que les feuilles obtenues selon l'invention possèdent propriétés mécaniques (résistance à la rupture notamment) nettement supérieures à celles des produits obtenus selon l'art antérieur préparés à partir de mélange ne contenant pas tous les ingrédients des mélanges suivant l'invention, ou malaxés à plus basse température, ou encore contenant moins de 10% en poids du polyéthylène de haute densité modifié.

## Revendications

1. Procédé pour la fabrication d'objets conformés à partir de compositions polyoléfiniques comprenant entre 30 et 70% en poids de polyéthylène de haute densité modifié au moyen de monomères polaires comprenant au moins une liaison insaturée et au moins un groupe carboxylique éventuellement sous forme d'anhydride et entre 30 et 70% en poids de fibres cellulosiques, caractérisé en ce que les compositions polyoléfiniques sont soumises à un malaxage opéré à une température supérieure d'au moins 20°C à la température de fusion du polyéthylène avant d'être mises en forme.

2. Procédé selon la revendication 1, caractérisé en ce que la malaxage est opéré à une température supérieure d'au moins 30°C à la température de fusion du polyéthylène.

3. Procédé selon la revendication 1 ou 2, caractérisé en ce que l'on met en oeuvre un polyéthylène de haute densité modifié dont l'indice de fusion est compris entre 0,5 et 10 g/10 min.

4. Procédé selon l'une quelconque des revendications 1 à 3, caractérisé en ce que l'on met en oeuvre un polyéthylène modifié au moyen d'anhydride maléique.

5. Procédé selon l'une quelconque des revendications 1 à 4, caractérisé en ce que l'on met en oeuvre un polyéthylène modifié par greffage au moyen de monomères polaires comprenant au moins une liaison insaturée et au moins un groupe carboxylique éventuellement sous forme d'anhydride.

6. Procédé selon la revendication 5, caractérisé en ce que l'one prépare les compositions polyoléfiniques en mélangeant directement le polyéthylène non modifié, les monomères polaires comprenant au moins une liaison insaturée et au moins un groupe carboxylique éventuellement sous forme d'anhydride et les fibres cellulosiques.

7. Procédé selon l'une quelconque des revendications 1 à 6, caractérisé en ce que les compositions polyoléfiniques sont mises en forme directement après le malaxage.

8. Procédé selon la revendication 7, caractérisé en ce que les compositions polyoléfiniques sont mises en forme de plaques par calandrage.

## Claims

1. Process for the manufacture of shaped articles from polyolefinic compositions comprising between 30 and 70% by weight of high-density polyethylene modified by means of polar monomers containing at least one unsaturated bond and at least one carboxyl group optionally in the form of an anhydride, and between 30 and 70% by weight of cellulosic fibres, characterised in that, before being shaped, the polyolefinic compositions are subjected to malaxation carried out at a temperature which is at least 20°C above the melting point of the polyethylene.

2. Process according to Claim 1, characterised in that the malaxation is carried out at a temperature which is at least 30°C above the melting point of the polyethylene.

3. Process according to Claim 1 or 2, characterised in that the modified high-density polyethylene used has a melt flow index of between 0.5 and 10 g/10 mins.

4. Process according to any one of Claims 1 to 3, characterised in that a polyethylene modified by means of maleic anhydride is used.

5. Process according to any one of Claims 1 to 4, characterised in that the modified polyethylene used is a polyethylene modified by grafting by means of polar monomers containing at least one unsaturated bond and at least one carboxyl group optionally in the form of an anhydride.

6. Process according to Claim 5, characterised in that the polyolefinic compositions are prepared by directly mixing the unmodified polyethylene, the polar monomers containing at least one unsaturated bond and at least one carboxyl group optionally in the form of an anhydride, and the cellulosic fibres.

7. Process according to any one of Claims 1 to 6, characterised in that the polyolefinic compositions are shaped directly after malaxation.

8. Process according to Claim 7, characterised in that the polyolefinic compositions are converted to sheets by calendering.

## Patentansprüche

1. Verfahren zur Herstellung von Formgegenständen aus Polyolefin-Zusammensetzungen enthaltend zwischen 30 und 70 Gew.-% Polyäthylen hoher Dichte modifiziert mittels polarer Monomerer enthaltend mindestens eine ungesättigte Verbindung und mindestens ein Carboxylgruppe, möglicherweise in Anhydridform, und enthaltend zwischen 30 und 70 Gew.-% Cellulosefasern, dadurch gekennzeichnet, daß die Polyolefin-Zusammensetzungen einem Kneten bei einer Temperatur ausgesetzt werden, die um mindestens 20°C über der Schmeltztemperatur des Polyäthylens vor der Formgebung liegt.

2. Verfahren nach Anspruch 1, dadurch gekennzeichnet, daß das Kneten bei einer Temperatur durchgeführt wird, die um mindestens 30°C über der Schmeltztemperatur des Polyäthylens liegt.

3. Verfahren nach Anspruch 1 oder 2, dadurch gekennzeichnet, daß ein modifiziertes Polyäthylen hoher Dichte verwendet wird, dessen Schmelzindex zwischen 0,5 und 10 g/10 min liegt.

4. Verfahren nach einem der Ansprüche 1 bis 3, dadurch gekennzeichnet, daß ein mittels Maleinanhydrid modifiziertes Polyäthylen verwendet wird.

5. Verfahren nach einem der Ansprüche 1 bis 4, dadurch gekennzeichnet, daß ein Polyäthylen verwendet wird, das durch Pfropfen mittels polarer Monomerer enthaltend mindestens eine ungesättigte Verbindung und mindestens eine Carboxylgruppe möglicherweise in Anhydridform modifiziert ist.

6. Verfahren nach Anspruch 5, dadurch gekennzeichnet, daß die Polyolefin-Zusammensetzungen zubereitet werden, indem das nichtmodifiziert Polyäthylen, die polaren Monomeren enthaltend mindestens eine ungesättigte Verbindung und mindestens eine Carboxylgruppe in Anhydridform und die Cellulosefasern direkt miteinander vermischt werden.

7. Verfahren nach einem der Ansprüch 1 bis 6, dadurch gekennzeichnet, daß die Polyolefin-Zusammensetzungen direkt nach dem Kneten verformt werden.

8. Verfahren nach Anspruch 7, dadurch gekennzeichnet, daß die Polyolefin-Zusammensetzungen durch Kalandrieren zu Platten geformt werden.